# EUROPEAN PATENT APPLICATION

(11) **EP 4 679 404 A1**
(43) Date of publication of application: **14.01.2026**
(21) Application number: 25177973.2
(22) Date of filing: 21.05.2025
(51) Int. Cl.: G08G 5/21, G06F 40/30, G08G 5/22, G08G 5/26, G08G 5/34, G08G 5/53, G08G 5/55

(54) **SYSTEM FOR ENHANCED CONTROLLER PILOT DATA LINK COMMUNICATIONS**

(30) Priority: 08.07.2024 IN 202411052301; 08.05.2025 US 202519202851
(71) Applicant: ARINC Incorporated, Annapolis, MD 21401 (US)
(72) Inventor: XAVIER, Jerrin, Allappuzha, KA 560064 (IN); BALACHANDRAN, Vishnu, Kozhikode, KL 673029 (IN)
(74) Representative: Dehns

(57) **Abstract**

Generally discussed herein are systems, apparatuses, and methods for generating a Controller Pilot Data Link Communication (CPDLC) digital message. This can include: a digital interface system (103) configured to receive input from one of a pilot or an air traffic controller. The digital interface system (103) can optionally include: a digital message generator (106) configured to receive the input and decode an intent of the input within an aviation context. The digital message generator (106) can be configured to determine a sample response based upon the intent. This can further include: a compliance system (108) configured to review the sample response for a potential error. If cleared by the review of the compliance system (108), the digital interface system (103) issues the sample response as the CPDLC digital message.

## Description

### TECHNICAL FIELD

Embodiments discussed herein generally relate to interface systems and methods for flight deck and air traffic control digital communication.

### BACKGROUND

Controller Pilot Data Link Communication (CPDLC) provides the ability for pilots and Air Traffic Control (ATC) to communicate digitally via text messages. One of the main benefits of this form of communication is limiting congestion on voice communication frequencies in busy airspace. This is important because air traffic capacity is already strained, and the projected increase in flight frequency in the near future will create unprecedented congestion. Traditional airspace systems and voice communications aren't equipped to manage this complex, multi-level traffic. CPDLC offers a solution by automating routine communications through text messages. This frees up radio channels for critical messages and allows controllers to manage more aircraft, which is essential in a denser airspace.

However, current CPDLC has drawbacks, including time delays, potential for misinterpretation, the need for manual input, and increased cognitive load for pilots and air traffic controllers. While CPDLC offers benefits for handling routine communications, its comparative slowness and other drawbacks could hinder its ability to manage the dynamic airspace envisioned in the short term and long term future.

### BRIEF DESCRIPTION OF THE DRAWINGS

In the drawings, which are not necessarily drawn to scale, like numerals can describe similar components in different views. Like numerals having different letter suffixes can represent different instances of similar components. The drawings illustrate generally, by way of example, but not by way of limitation, various embodiments or examples discussed in the present document.
FIG. 1 illustrates, by way of example, a block diagram of an embodiment of a system for generating one or more CPDLC messages.
FIG. 2 illustrates, by way of example, a block diagram of an embodiment of a system includes a more detailed view of a generator of the one or more CPDLC messages.
FIG. 3 illustrates, by way of example, a block diagram of an embodiment of a system that shows a more detailed view of situation urgency determination by the attention module.
FIG. 4 illustrates, by way of example, a block diagram of an example of a system includes a more detailed view of a compliance system used to review the one or more CPDLC messages prior to being sent.
FIG. 5 illustrates, by way of example, a flow diagram of an example of a method for generating one or more CPDLC messages data.
FIG. 6 illustrates, by way of example, a block diagram of an embodiment of a machine upon which one or more processes or operations (e.g., methods) discussed herein may be performed.

### DETAILED DESCRIPTION

This disclosure generally relates to improvements in CPDLC. One or more embodiments may help in providing a more coherent and less burdensome digitized text messaging system using an attention model and/or a rules system as discussed herein.

Currently, CPDLC relies on text-based messaging, which introduces delays that voice communications do not have. Steps like composing, sending, reading, and interpreting messages all add time. These delays can become critical in time-sensitive situations or when handling dense air traffic. Furthermore, the current CPDLC process still relies heavily on manual input from controllers, which can lead to potential bottlenecks as traffic complexity increases. Additionally, CPDLC messages can place extra demands on a controller's focus. The need to read and interpret text competes with the constant decision-making required in air traffic management. The systems and methods presented here provide an approach to address these and other limitations of current CPDLC systems.

The present application discloses systems and methods with rule-based and attention-based mechanisms for automating CPDLC responses. This methodology is an approach to address the limitations of current CPDLC systems. By understanding context, generating standard communications, and even anticipating pilot or controller responses, attention-driven mechanisms discussed herein can improve the speed and efficiency of non-critical CPDLC interactions. These improvements can streamline the CPDLC process, not only reducing congestion on busy voice channels but also freeing up controller workload for more complex decision-making.

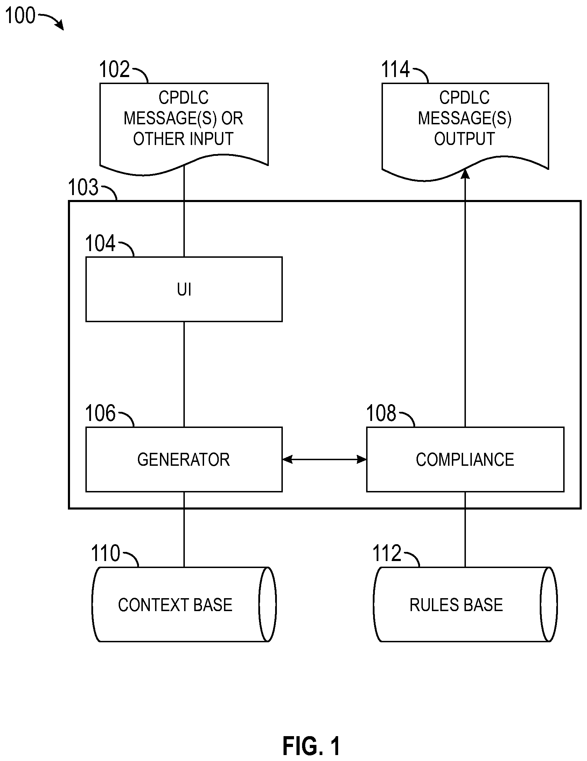

FIG. 1 is a block diagram of an embodiment of a system 100. The system 100 as illustrated includes one or more CPDLC messages or other input 102 and a digital interface system 103 including a user interface 104, a generator 106 and a compliance system 108. The system 100 can include a context base 110 and a rules base 112.

As used herein one or more CPDLC messages are a digital text message(s) that provide the ability for pilots and Air Traffic Control (ATC) to communicate via text. Examples of such messages and networks used to carry such messages are described in United States Patent No. 10,887,255B2 owned by Applicant and incorporated herein by reference in its entirety. As described therein, aircraft operate in airspace controlled by a Current Data Authority (CDA) with an associated CDA antenna. The CDA may communicate with and control each aircraft within airspace bounded by its geographical area of responsibility (AOR). In order to enter the specific airspace of the CDA, each aircraft must establish data link communications with the CDA before entering the CDA AOR. Communications between the CDA and each aircraft (both ownship and transitioning aircraft) may be direct via a line of sight communications link or via satellite communications via a communications satellite. The data associated with the CPDLC signal is the same regardless of the method of transmission and reception.

Enroute to a destination, the ownship aircraft may transit a plurality of AORs each with a data authority tasked with aircraft management and separation. Here, a Next Data Authority (NDA) with associated NDA antenna may be next in line for the ownship aircraft to contact and remain under positive control. For example, Gander Area Control Center (ACC) with an identifier of CZQX may function as a CDA in the north Atlantic. As the ownship aircraft may fly east across the Atlantic, the NDA may include Shanwick Oceanic control with an identifier of EGGX. Before entering the airspace controlled by Shanwick, the ownship aircraft must establish a CPDLC link with Shanwick.

Pilots of an ownship aircraft have established communication with the CDA and are transiting the airspace of the CDA. In addition, aircraft maybe nearby the ownship aircraft where CPDLC communications between the CDA and these aircraft may be of interest to the ownship aircraft pilots for increased pilot situational awareness.

The one or more CPDLC messages can be depicted, inputted, outputted, otherwise generated etc. on the user interface 104 (UI) of the digital interface system 103. In particular, the one or more CPDLC messages may be depicted on the user interface 104 by text. The user interface 104 can be a multi-function display (MFD) sited on a flight deck display system, the control tower and/or another suitable location. In some cases, the user interface 104 may be or may include a chatbot, audio, video and/or other capability as mechanisms for inputting, outputting or otherwise communicating with pilot(s) and or controller(s).

The digital interface system 103 can include various components (e.g., an attention model, a compliance system) some of which are discussed subsequently and can communicate with various resources as further discussed herein. As depicted herein, the digital interface system 103 can communicate with the context base 110 and the rules base 112. However, examples contemplate that the context base 110 and/or the rules base 112 could be integrated into the digital interface system 103.

The digital interface system 103 can be configured to receive input 102 (e.g., the one or more CPDLC messages or a desired response to the one or more CPDLC messages) from the pilot or the air traffic controller such as via the user interface 104. The generator 106 (e.g., a digital message generator) can be configured to receive the input 102 and decode an intent of the input 102 within an aviation context. The generator 106 is configured to determine a sample response based upon the intent as further discussed herein. The compliance system 108 is configured to review the sample response for a potential error. If cleared of potential error by the review of the compliance system 108, the digital interface system 103 issues the sample response as a CPDLC digital message.

As an example the generator 106 can be or can include a model that is configured to operate as an artificial intelligence (AI) assistant. The generator 106 can be adapted to the aviation context (specific use case with particular applicable terminology) and can further adapted for generation of CPDLC messages. The generator 106 can utilize and/or can be trained on the context base 110. The context base 110 can include aviation specific terminology (e.g., derived from instruction manuals, training videos, and the like, a library of prior CPDLC messages, a standard CPDLC message format, information on prevailing weather conditions, information on a flight-plan and review of an air space status. The generator 106 can leverage one or more machine learning (ML) agents, including trained large language models (LLMs), to process and respond to input 102. For example, the AI assistant can provide such ML agent with a prompt including instructions to answer the input 102, as well as with a context that includes use case-specific relevant information from the context base 110.

As an example, initially, the generator 106 can be developed using a model pre-trained on a large dataset specifically designed for natural language processing (NLP) tasks. This allows the generator 106 to have learned a wealth of linguistic knowledge, reducing the time and resources needed for CPDLC-specific fine-tuning. The generator 106 can be equipped with an understanding of complex sentence structures, word relationships, and various language nuances. This allows for a better starting point for fine-tuning on the specialized domain of CPDLC communication. Pre-training on a diverse dataset helps the generator 106 handle variations in phrasing or unforeseen situations that might not be explicitly present in the CPDLC fine-tuning data. During CPDLC fine-tuning, aviation terminology is introduced. The generator 106 is trained on resources like training videos, training books, aircraft manuals, weather reports, etc. This helps the generator 106 understand the formal style often found in CPDLC messages. The generator 106 can develop an understanding of sentence structures, grammatical rules, and common word usage patterns essential to processing CPDLC instructions. Learning the nuances of aviation terminology reduces the chance of the generator 106 misinterpreting words with multiple meanings in a general context (e.g., "hold" as a directive vs. everyday usage).

The generator 106 can be trained to recognize specific message types. CPDLC follows strict formats with some free-form manually entered exceptions that also must be trained for and accommodated. The generator 106 can be trained to determine whether the input 102 such as the one or more CPDLC messages is a clearance, request, confirmation, or report. This allows the generator 106 to tailor its response generation and validation rules. Regards training the generator 106, the generator 106 reviews a multitude of labeled CPDLC message types (e.g., clearance, request, confirmation, report, etc.), learning to recognize patterns of keywords, structures, and specific codes used within each message type.

The generator 106 can be trained to allow of automating of CPDLC messaging by taking action in both sending, receiving and anticipating response by extracting key information. Automating responses often include identifying and extracting specific data. The generator 106 is trained to accurately identify flight identifier (flight identification number), altitude, altitude changes, route, requested routes, and more. The generator 106 is exposed to messages with different values tagged (e.g., "XYZ123 cleared flight level 350," where "XYZ123" is labeled as [flight ID] and "350" as [altitude]). Beyond the literal text of a message, comprehending what the pilot or controller is asking for or reporting is key for accurate responses. Messages might be paired with corresponding actions a controller or controller would take. As an example: "ABC123 requesting descent due to turbulence" results in one or more various actions: Investigate weather along the route, check traffic conflicts at lower levels, generate clearance options, etc.

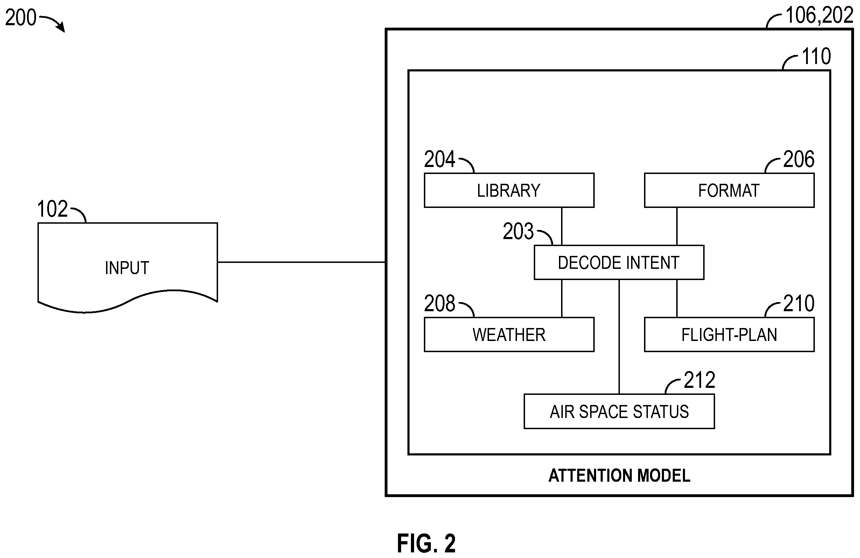

As is further discussed subsequently in regards to FIG. 2, the generator 106 can determine understanding of underlying intent of the input 102 (e.g., the CPDLC message). Understanding the motivation (the intent) that underlies the motive for the input 102 is important for accuracy, coherence and functionality of the generator 106.

The context base 110 can include extensive aviation terminology and a comprehensive library of CPDLC messages. These can include standard format messages and free-form messages. The library can be dynamically updated. Prevailing weather conditions can be obtained from the National Weather Service or other reputable sources and can include wind speed, wind direction, temperature, air pressure, visibility, cloud cover, presence of precipitation, turbulence, etc. The flight-plan data can be accessed from flight plans logged with the FAA, ICAO, DOD or other applicable agency and can include information about intended route, altitude, aircraft type, and other relevant details. Air space status can include number of planes in the CDA, status of such planes (e.g., takeoff, descent to landing, holding, cruising), air-space restrictions in the CDA if applicable, altitudes, plane status for the pilot making a request, plane types, and other relevant information.

The digital interface system 103 additionally includes the compliance system 108. The compliance system 108 can act as a check on the generator 106. The compliance system 108 can ensure that the generator 106 is adhering to applicable safety, regulatory and other rules. The compliance system 108 can include or can communicate with the rules base 112. The rules base 112 can include, but is not limited to applicable checklists, governing regulation, airspace restrictions, and the like. The compliance system 108 can be configured to perform conflict detection, operational logic review and regulatory compliance review based upon the rules base 112 and/or other contextual data (e.g., location, plane type, altitude, weather conditions, status: clearance, request, confirmation, report, etc.).

FIG. 1 illustrates interaction between the generator 106 and the compliance system 108 including the compliance system 108 checking a sample response for potential error. FIG. 1 shows the sample response is cleared by the review of the compliance system 108 such that the digital interface system 103 such as via the user interface 104 or another modality issues the sample response as a CPDLC digital message 114. However, as depicted by the double ended arrow in FIG. 1, if error is determined by the compliance system 108, the compliance system 108 rejects the sample response and requires the generator 106 to edit the sample response and re-submit the sample response for a second review for possible error by the compliance system 108.

FIG. 2 is a block diagram of an embodiment of a system 200 that includes a more detailed view of the generator 106. Various data including that of the context base 110 and input 102 can be indexed, tagged, or otherwise organized by the generator 106. The input 102 (e.g., text such as one or more CPDLC messages, audio, etc.) can be received by the generator 106. The generator 106 (and indeed the context base 110) can be utilized and incrementally updated with one or more CPDLC messages processed by the generator 106. The generator 106 as illustrated includes an attention model 202 configured to decode intent 203 of the input 102 by performing: natural language processing on the input 102, natural language processing using a library 204 of prior CPDLC messages, natural language processing using a standard message format 206 as guideline, a review of prevailing weather 208 conditions, a review of a flight-plan 210 and/or review of an air space status 212. The library 204, standard message format 206, prevailing weather 208, flight-plan 210 and air space status 212 can be part of the context base 110, for example, or can be obtained by the attention model 202 through interaction with other relevant resources.

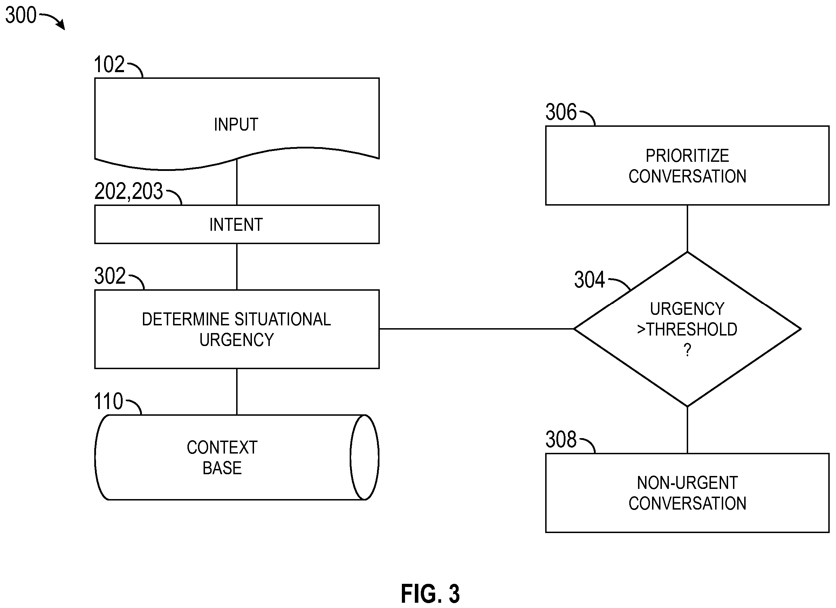

Although not specifically illustrated, the generator 106 and/or the attention model 202 can additionally be configured for preprocessing, categorization, event encoding, clustering, linking, postprocessing and/or other data organization and contextual interpretation. For example, the attention model 202 can filter the one or more CPDLC messages or other input 102, extract relevant data (e.g., flight identifier (flight identification number), altitude, altitude changes, route, requested routes). The preprocessing can apply a named entity recognition technique, a matching technique, a concept matching technique, and/or a tagging technique to the input 102. The tagging technique can include a Part of Speech (POS) tagging technique to identify nouns, verbs, adverbs, and/or adjectives among other POS tags. The POS tags can help in identifying actors and actions and can help in determining content and/or category. Filtering the input 102 can include removing non-critical data, quantifying urgency and prioritizing urgent messages (discussed in FIG. 3) from non-urgent messages, etc. Categorization can receive the tags (or other relevant data) from the preprocessing and assign a category to the CPDLC message or other input using associated tags. The categories can include categories as previously discussed or other categories. Extracting the relevant data (e.g., the content) can be done with trained techniques discussed above using the categories discussed previously. Event encoding can convert the input (e.g., the one or more CPDLC messages) into a vector that includes one or more named entities (flight identifier), one or more actors, and/or one or more actions. The event encoding can implement a natural language processing tool, such as Supervised Latent Dirichlet Allocation (sLDA), Google Cloud NLP API, IBM Watson, Amazon Comprehend, Natural Language Toolkit (NLTK), MonkeyLearn, SpaCy, Gensim, TextBlob and/or Stanford Core Natural Language Processing (NLP), to recognize and/or extract a named entity (e.g., an actor) or an action. The event encoding can take text of the input 102 and associate the text with the base form of their use (e.g., noun, verb, adverb, preposition, etc.). The event encoding suitably trained can identify concepts appearing in the one or more CPDLC messages data. The event encoding can determine a category or priority of a one or more CPDLC messages.

CPDLC messages often focus on conveying essential information, but beneath the surface lies the pilot's or controller's motive for sending the message. Understanding this intent is key to providing the most appropriate and helpful response, promoting safety and efficiency in the airspace. Like texting friends, CPDLC lacks cues like tone of voice, leaving room for misinterpretation, especially with varying phrasing. The attention model 202 properly trained learns to recognize the "why" behind the words by analyzing the library 204 of past CPDLC exchanges and/or the standard CPDLC message format. This training includes the contents of the CPDLC messages, the corresponding actions taken by controllers (or pilots), relevant weather and/or traffic data. By understanding intent, the attention model 202 can tailor responses, identifies urgent situations, reduces back-and-forth communication, and relieves controller workload. This approach makes CPDLC a more powerful tool for managing busy airspaces.

FIG. 3 illustrates a block diagram of an embodiment of a system 300 that shows a more detailed view of situation urgency determination by the attention model 202. As discussed previously, the attention model 202 can be configured to decode intent 203 of the input 102 by performing: natural language processing on the input 102, natural language processing using the context base 110 (e.g., the library 204 of prior CPDLC messages, natural language processing using a standard message format 206 as guideline, a review of prevailing weather 208 conditions, a review of a flight-plan 210 and/or review of an air space status 212) as previously discussed in FIG. 3. Additionally, the attention model 202 can be configured to determine a situational urgency 302 based upon the intent of the input by performing: natural language processing on the input 102, natural language processing using the library of prior CPDLC messages, natural language processing using the standard message format, a review of prevailing weather conditions, a review of a flight-plan and review of an air space status. These criteria can be part of the context base 110 as previously discussed or can be operationally gathered from other sources.

By grasping pilot or controller intent, the attention model 202 can generate responses aligned with the underlying need, enhancing communication effectiveness. Understanding urgency enables swift action in critical scenarios like adverse weather conditions, bolstering airspace safety. Automating responses to routine requests alleviates controller workload, allowing them to focus on more intricate decisions. Accurate intent recognition minimizes the need for clarification messages, streamlining communication flow and enhancing overall airspace efficiency.

As an example, based upon the situational urgency 302 (a quantified score, score along a continuum or the like), for example, the system 300 prioritizes the CPDLC message (e.g., the input 102) and the conversation 306. This can include flagging the conversation 306 as critical and sending an alert to one or both of the pilot and the air traffic controller to conduct voice communications. According to other examples, if the scored urgency is above a threshold 304, the conversation 306 is prioritized to be handled by the controller or pilot personally (e.g., not handled by the system 300). In such case, if the scored urgency is below the threshold 304, the conversation is deemed non-urgent 308 and handled by the system 300.

According to yet further examples, based at least upon the performing the natural language processing of the library of prior CPDLC messages, the attention model 202 is configured to prioritize the conversation 306, anticipate a response to the CPDLC digital message and determine a second sample response. Hence, the attention model 202 (the digital message generator) can be configured to generate two or more possible sample responses and to select the sample response from the two or more possible sample responses quantitatively based upon a plurality of decision making factors including a situational urgency score, a directness of the route, an aircraft type, prevailing weather conditions, a flight-plan, and/or an air spaced status.

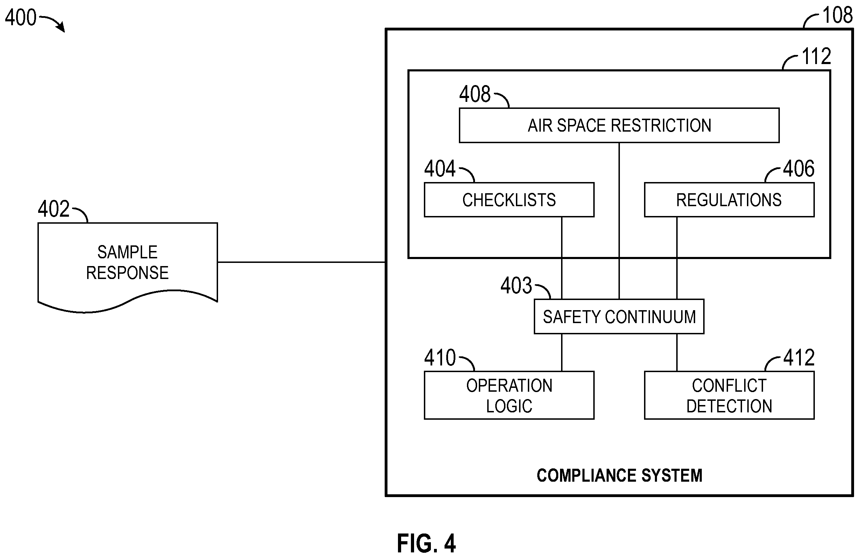

FIG. 4 shows a block diagram of an embodiment of a system 400 that shows a more detailed view of the compliance system 108. The compliance system 108 can include or can communicate with the rules base 112. The rules base 112 can include, but is not limited to, applicable safety checklists 404, governing regulation 406, airspace restrictions 408, and the like. The compliance system 108 can be configured to perform a review such as a safety continuum review 403 that includes, but is not limited to, conflict detection 410, operational logic 412 and regulatory compliance (using items 404-408) based upon the rules base 112 and/or other contextual data (e.g., location, plane type, altitude, weather conditions, status: clearance, request, confirmation, report, etc.). Thus, for example, the compliance system 108 reviews the sample response 402 for regulatory compliance and based upon airspace restrictions (using items 404-408), performs a conflict detection review 410 and performs an operational logic review 412. The safety checklists 404, governing regulation 406, airspace restrictions 408 can be part of the rules base 112, for example, or can be obtained by the compliance system 108 through interaction with other relevant resources. According to one embodiment, the compliance system 108 is configured to quantify the sample response using the safety continuum 403 and reject the sample response unless the sample response if implemented results in a safest possible action.

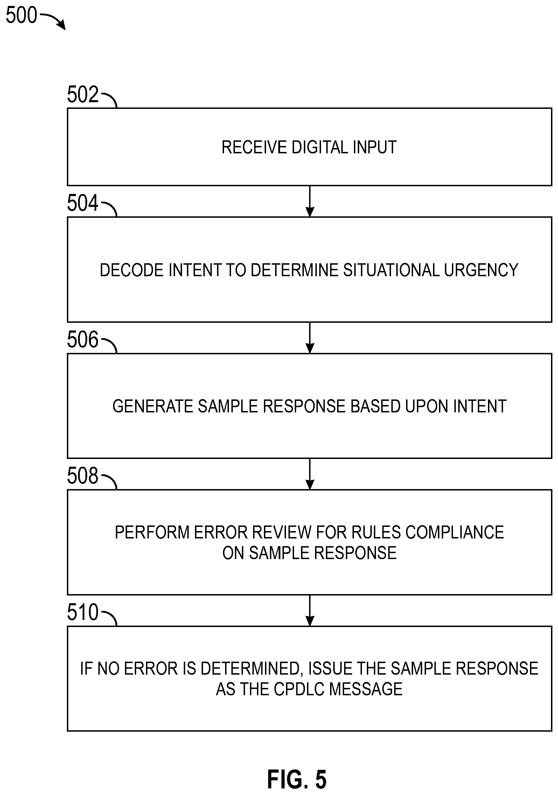

FIG. 5 is a flow diagram of an embodiment of a method 500. The method 500 as illustrated is a method for generating a CPDLC digital message. The method 500 includes digitally receiving 502 an input (e.g., a CPDLC message or other input) from one of a pilot or an air traffic controller. The method 500 includes decoding 504 an intent of the input within an aviation context using an attention model trained to determine a situational urgency. The method 500 includes generating 506 a sample response based upon the intent. The method 500 includes performing 508 a review of the sample response for possible error related to regulatory compliance, applicable airspace restrictions, operational procedure and operating conflict. If no error is determined based upon the review, the method 500 issues 510 the sample response as the CPDLC digital message.

The method 500 can optionally include if error is determined, further comprising: rejecting the sample response; requiring an edit of the sample response; and resubmitting the sample response for a second review for possible error. The method 500 can include the performing the review is conducted by quantifying the sample response on a safety continuum and the rejecting the sample response unless the sample response, if implemented, would result in a safest possible action. The method 500 can include determining the situational urgency includes performing natural language processing on library of prior CPDLC messages, performing natural language processing using a standard message format, performing a determination of prevailing weather conditions, performing a review of a flight-plan and performing a review an air space status. The method 500 can further include prioritizing the CPDLC message as critical and sending an alert to one or both of the pilot and the air traffic controller to conduct voice communications based upon the situational urgency. The method 500 can further include prioritizing a conversation, anticipating a response to the CPDLC digital message and determining a second sample response based at least upon the natural language processing of the library of prior CPDLC messages. The method 500 can include generating two or more possible sample responses and selecting the sample response from the two or more possible sample responses quantitatively based upon a plurality of decision making factors including a situational urgency score, a directness of the route, an aircraft type, prevailing weather conditions, a flight-plan, and an air spaced status.

Systems, apparatuses and methods that help in organizing, generating, contextualizing, etc. the one or more CPDLC messages are presented herein. The systems, apparatuses and methods, for example, contemplate a generator (e.g., an attention model) paired with a rule-based system (compliance system) that offers various benefits as discussed herein. The attention model deciphers the nuances of CPDLC messages or other aviation input, understanding pilot or controller intent and generates tailored responses. The methodology and structure discussed herein reduces ambiguity and streamlines communication. Meanwhile, the rule-based system acts as the bedrock of safety. The rule-based system enforces airspace restrictions, conflict detection, operational logic, and regulatory compliance. Using real-time data on flight plans, weather, and airspace status, both the attention model and the rule-based system work synergistically - the rules refine their safety checks, and the attention model prioritizes decision-making factors. This combination ensures that CPDLC responses are not only intelligent and efficient but also adhere to aviation's uncompromising safety standards, empowering controllers to better handle the complexities of future air traffic.

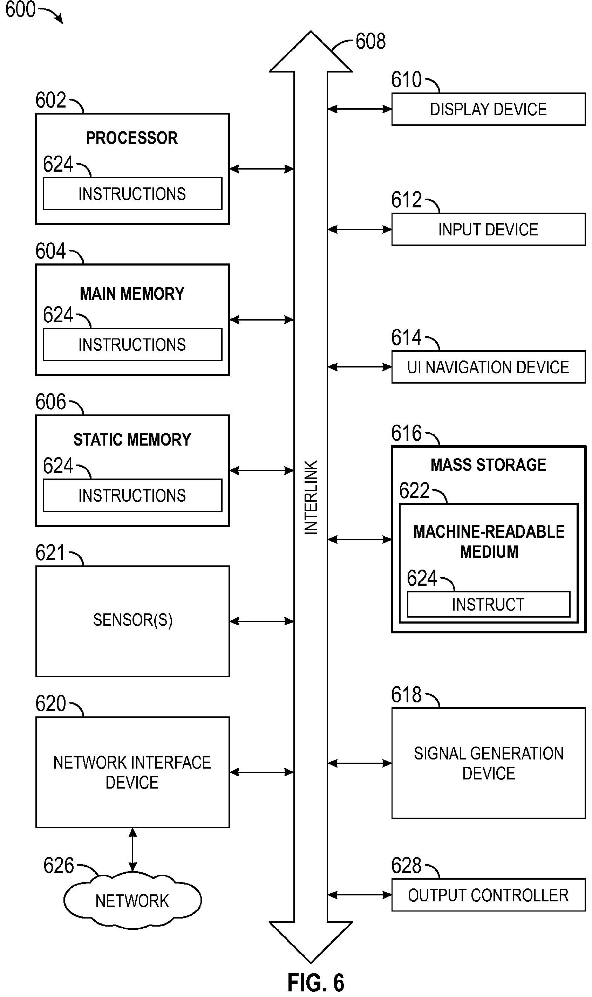

FIG. 6 illustrates a block diagram of a machine 600 upon which any one or more of the processes (e.g., methodologies) discussed herein may be performed. In alternative embodiments, the machine 600 can operate as a standalone device or can be connected (e.g., networked) to other machines. In a networked deployment, the machine 600 can operate in the capacity of a server machine, a client machine, or both in server-client network environments. In an example, the machine 600 can act as a peer machine in peer-to-peer (P2P) (or other distributed) network environment. The machine 600 can be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, can include, or can operate on, logic or a number of components, modules, or mechanisms. Modules are tangible entities (e.g., hardware) capable of performing specified operations when operating. A module includes hardware. In an example, the hardware can be specifically configured to carry out a specific operation (e.g., hardwired). In an example, the hardware can include configurable execution units (e.g., transistors, circuits, etc.) and a computer readable medium containing instructions, where the instructions configure the execution units to carry out a specific operation when in operation. The configuring can occur under the direction of the executions units or a loading mechanism. Accordingly, the execution units are communicatively coupled to the computer readable medium when the device is operating. In this example, the execution units can be a member of more than one module. For example, under operation, the execution units can be configured by a first set of instructions to implement a first module at one point in time and reconfigured by a second set of instructions to implement a second module.

Machine (e.g., computer system) 600 can include a hardware processor 602 (e.g., a central processing unit (CPU), a graphics processing unit (GPU), a hardware processor core, or any combination thereof), a main memory 604 and a static memory 606, some or all of which can communicate with each other via an interlink (e.g., bus) 608. The machine 600 can further include a display unit 610, an alphanumeric input device 612 (e.g., a keyboard), and a user interface (UI) navigation device 614 (e.g., a mouse). In an example, the display unit 610, input device 612 and UI navigation device 614 can be a touch screen display. The machine 600 can additionally include a storage device (e.g., drive unit) 616, a signal generation device 618 (e.g., a speaker), a network interface device 620, and one or more sensors 621, such as a global positioning system (GPS) sensor, compass, accelerometer, or other sensor. The machine 600 can include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 616 can include a machine readable medium 622 on which is stored one or more sets of data structures or instructions 624 (e.g., software) embodying or utilized by any one or more of the process or functions described herein. The instructions 624 can also reside, completely or at least partially, within the main memory 604, within static memory 606, or within the hardware processor 602 during execution thereof by the machine 600. In an example, one or any combination of the hardware processor 602, the main memory 604, the static memory 606, or the storage device 616 can constitute machine readable media.

While the machine readable medium 622 is illustrated as a single medium, the term "machine readable medium" can include a single medium or multiple media (e.g., a centralized or distributed database, and/or associated caches and servers) configured to store the one or more instructions 624.

The term "machine readable medium" can include any medium that is capable of storing, encoding, or carrying instructions for execution by the machine 600 and that cause the machine 600 to perform any one or more of the processes of the present disclosure, or that is capable of storing, encoding or carrying data structures used by or associated with such instructions. Non-limiting machine readable medium examples can include solid-state memories, and optical and magnetic media. In an example, a massed machine readable medium comprises a machine readable medium with a plurality of particles having resting mass. Specific examples of massed machine readable media can include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

### Examples and Notes

The present subject matter can be described by way of several examples.

Example 1 is a system with processing circuitry for generating a Controller Pilot Data Link Communication (CPDLC) digital message, optionally comprising: a digital interface system configured to receive input from one of a pilot or an air traffic controller, the digital interface system comprising: a digital message generator configured to receive the input and decode an intent of the input within an aviation context, wherein the digital message generator is configured to determine a sample response based upon the intent; and a compliance system configured to review the sample response for a potential error; wherein, if cleared by the review of the compliance system, the digital interface system issues the sample response as the CPDLC digital message.

In Example 2, the subject matter of Example 1 optionally includes, wherein, if error is determined by the compliance system, the compliance system rejects the sample response and requires the digital message generator to edit the sample response and re-submit the sample response for a second review for possible error by the compliance system.

In Example 3, the subject matter of Example 2 optionally includes, wherein the compliance system is configured to quantify the sample response using a safety continuum and reject the sample response unless the sample response if implemented results in a safest possible action.

In Example 4, the subject matter of Examples 1-3 optionally includes, wherein the digital message generator includes an attention model configured to determine a situational urgency based upon the intent of the input by performing: natural language processing using a library of prior CPDLC messages, natural language processing using a standard message format, a review of prevailing weather conditions, a review of a flight-plan and review of an air space status.

In Example 5, the subject matter of Example 4 optionally includes, wherein, based upon the situational urgency, the digital interface system prioritizes the CPDLC message as critical and sends an alert to one or both of the pilot and the air traffic controller to conduct voice communications.

In Example 6, the subject matter of Examples 4-5 optionally includes, wherein, based at least upon the performing the natural language processing of the library of prior CPDLC messages, the digital message generator is configured to prioritize a conversation, anticipate a response to the CPDLC digital message and determine a second sample response.

In Example 7, the subject matter of Examples 1-6 optionally includes, wherein the compliance system reviews the sample response for regulatory compliance and based upon airspace restrictions, performs a conflict detection review and performs an operational logic review.

In Example 8, the subject matter of Examples 1-7 optionally includes, wherein the digital message generator is configured to generate two or more possible sample responses and to select the sample response from the two or more possible sample responses quantitatively based upon a plurality of decision making factors including a situational urgency score, a directness of a route, an aircraft type, prevailing weather conditions, a flight-plan, and an air spaced status.

Example 9 is a method for generating a Controller Pilot Data Link Communication (CPDLC) digital message, optionally comprising: digitally receiving an input from one of a pilot or an air traffic controller; decoding an intent of the input within an aviation context using an attention model trained to determine a situational urgency; generating a sample response based upon the intent; performing a review of the sample response for possible error related to regulatory compliance, applicable airspace restrictions, operational procedure and operating conflict; if no error is determined based upon the review, issuing the sample response as the CPDLC digital message.

In Example 10, the subject matter of Example 9 optionally includes, wherein, if error is determined, further comprising: rejecting the sample response; requiring an edit of the sample response; and resubmitting the sample response for a second review for possible error.

In Example 11, the subject matter of Example 10 optionally includes, wherein the performing the review is conducted by quantifying the sample response on a safety continuum and the rejecting the sample response unless the sample response, if implemented, would result in a safest possible action.

In Example 12, the subject matter of Examples 9-11 optionally includes, wherein the determining the situational urgency includes performing natural language processing on library of prior CPDLC messages, performing natural language processing using a standard message format, performing a determination of prevailing weather conditions, performing a review of a flight-plan and performing a review an air space status.

In Example 13, the subject matter of Example 12 optionally includes, prioritizing the CPDLC message as critical and sending an alert to one or both of the pilot and the air traffic controller to conduct voice communications based upon the situational urgency.

In Example 14, the subject matter of Examples 9-13 optionally includes, prioritizing a conversation, anticipating a response to the CPDLC digital message and determining a second sample response based at least upon the natural language processing of the library of prior CPDLC messages.

In Example 15, the subject matter of Examples 9-14 optionally includes, generating two or more possible sample responses and selecting the sample response from the two or more possible sample responses quantitatively based upon a plurality of decision making factors including a situational urgency score, a directness of a route, an aircraft type, prevailing weather conditions, a flight-plan, and an air spaced status.

Example 16 is a non-transitory computer readable storage device including instructions, which when executed by a machine, configure the machine to: receive input from one of a pilot or an air traffic controller; decode an intent of the input within an aviation context; determine a sample response based upon the intent; implement a compliance system to review the sample response for a potential error; if cleared of the potential error based upon the review by the compliance system, issue the sample response as a CPDLC digital message.

In Example 17, the subject matter of Example 16 includes, wherein, if error is determined by the compliance system, the compliance system rejects the sample response and requires the storage device to edit the sample response and re-submit the sample response for a second review for possible error by the compliance system, and wherein the compliance system is configured to quantify the sample response using a safety continuum and reject the sample response unless the sample response if implemented results in a safest possible action.

In Example 18, the subject matter of Examples 16-17 includes, wherein the storage device includes an attention model configured to determine a situational urgency based upon the intent of the input by performing: natural language processing using a library of prior CPDLC messages, natural language processing using a standard message format, a review of prevailing weather conditions, a review of a flight-plan and review of an air space status.

In Example 19, the subject matter of Example 18 includes, wherein, based upon the situational urgency, the attention model performs one of: prioritizes the CPDLC message as critical and sends an alert to one or both of the pilot and the air traffic controller to conduct voice communications or anticipates a response to the CPDLC digital message and determines a second sample response.

In Example 20, the subject matter of any one of Examples 16-19 includes, wherein the compliance system reviews the sample response for regulatory compliance and based upon airspace restrictions, performs a conflict detection review and performs an operational logic review.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

The above Description of Embodiments includes references to the accompanying drawings, which form a part of the detailed description. The drawings show, by way of illustration, specific embodiments in which methods, apparatuses, and systems discussed herein can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

The flowchart and block diagrams in the FIGS. illustrate the architecture, functionality, and operation of possible implementations of systems, methods and computer program products according to various aspects of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The functions or processes described herein can be implemented in software, hardware, human implemented procedures, or a combination thereof. The software can consist of computer executable instructions stored on computer readable media such as memory or other type of storage devices. The term "computer readable media" is also used to represent any means by which the computer readable instructions can be received by the computer, such as by different forms of wired or wireless transmissions. Further, such functions correspond to modules, which are software, hardware, firmware or any combination thereof. Multiple functions can be performed in one or more modules as desired, and the embodiments described are merely examples. The software can be executed on a digital signal processor, ASIC, microprocessor, or other type of processor operating on a computer system, such as a personal computer, server or other computer system.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) can be used in combination with each other. Other embodiments can be used, such as by one of ordinary skill in the art upon reviewing the above description. It is submitted with the understanding that it will not be used to interpret or limit the scope or meaning of the claims. Also, in the above Description of Embodiments, various features can be grouped together to streamline the disclosure. This should not be interpreted as intending that an unclaimed disclosed feature is essential to any claim. Rather, inventive subject matter can lie in less than all features of a particular disclosed embodiment. Thus, the following claims are hereby incorporated into the Description of Embodiments as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A system with processing circuitry for generating a Controller Pilot Data Link Communication, CPDLC, digital message, comprising:
a digital interface system (103) configured to receive input from one of a pilot or an air traffic controller, the digital interface system (103) comprising:
a digital message generator (106) configured to receive the input and decode an intent of the input within an aviation context, wherein the digital message generator (106) is configured to determine a sample response based upon the intent; and
a compliance system (108) configured to review the sample response for a potential error;
wherein, if cleared by the review of the compliance system (108), the digital interface system (103) issues the sample response as the CPDLC digital message.

2. The system of claim 1, wherein, if error is determined by the compliance system (108), the compliance system (108) rejects the sample response and requires the digital message generator (106) to edit the sample response and re-submit the sample response for a second review for possible error by the compliance system (108), and optionally wherein the compliance system (108) is configured to quantify the sample response using a safety continuum and reject the sample response unless the sample response if implemented results in a safest possible action.

3. The system of claim 1 or 2, wherein the digital message generator (106) includes an attention model configured to determine a situational urgency based upon the intent of the input by performing: natural language processing using a library of prior CPDLC messages, natural language processing using a standard message format, a review of prevailing weather conditions, a review of a flight-plan and review of an air space status.

4. The system of claim 3, wherein, based upon the situational urgency, the digital interface system (103) prioritizes the CPDLC message as critical and sends an alert to one or both of the pilot and the air traffic controller to conduct voice communications.

5. The system of claim 3 or 4, wherein, based at least upon the performing the natural language processing of the library of prior CPDLC messages, the digital message generator (106) is configured to prioritize a conversation, anticipate a response to the CPDLC digital message and determine a second sample response.

6. The system of claim 3, 4 or 5, wherein the compliance system (108) reviews the sample response for regulatory compliance and based upon airspace restrictions, performs a conflict detection review and performs an operational logic review.

7. The system of claim 4, wherein the digital message generator (106) is configured to generate two or more possible sample responses and to select the sample response from the two or more possible sample responses quantitatively based upon a plurality of decision making factors including a situational urgency score, a directness of a route, an aircraft type, prevailing weather conditions, a flight-plan, and an air spaced status.

8. A method for generating a Controller Pilot Data Link Communication, CPDLC, digital message, comprising:
digitally receiving an input from one of a pilot or an air traffic controller;
decoding an intent of the input within an aviation context using an attention model trained to determine a situational urgency;
generating a sample response based upon the intent;
performing a review of the sample response for possible error related to regulatory compliance, applicable airspace restrictions, operational procedure and operating conflict;
if no error is determined based upon the review, issuing the sample response as the CPDLC digital message.

9. The method of claim 8, wherein, if error is determined, further comprising:
rejecting the sample response;
requiring an edit of the sample response; and
resubmitting the sample response for a second review for possible error.

10. The method of claim 9, wherein the performing the review is conducted by quantifying the sample response on a safety continuum and the rejecting the sample response unless the sample response, if implemented, would result in a safest possible action.

11. The method of any of claims 8-10, wherein the determining the situational urgency includes performing natural language processing on library of prior CPDLC messages, performing natural language processing using a standard message format, performing a determination of prevailing weather conditions, performing a review of a flight-plan and performing a review an air space status.

12. The method of claim 11, further comprising prioritizing the CPDLC message as critical and sending an alert to one or both of the pilot and the air traffic controller to conduct voice communications based upon the situational urgency, and/or further comprising prioritizing a conversation, anticipating a response to the CPDLC digital message and determining a second sample response based at least upon the natural language processing of the library of prior CPDLC messages.

13. The method of any of claims 8-12, further comprising generating two or more possible sample responses and selecting the sample response from the two or more possible sample responses quantitatively based upon a plurality of decision making factors including a situational urgency score, a directness of a route, an aircraft type, prevailing weather conditions, a flight-plan, and an air spaced status.

14. A non-transitory computer readable storage device including instructions, which when executed by a machine, configure the machine to:
receive input from one of a pilot or an air traffic controller;
decode an intent of the input within an aviation context;
determine a sample response based upon the intent;
implement a compliance system (108) to review the sample response for a potential error;
if cleared of the potential error based upon the review by the compliance system (108), issue the sample response as a CPDLC digital message.

15. The storage device of claim 14, wherein, if error is determined by the compliance system (108), the compliance system (108) rejects the sample response and requires the storage device to edit the sample response and re-submit the sample response for a second review for possible error by the compliance system (108), and wherein the compliance system (108) is configured to quantify the sample response using a safety continuum and reject the sample response unless the sample response if implemented results in a safest possible action; and/or
wherein the storage device includes an attention model configured to determine a situational urgency based upon the intent of the input by performing: natural language processing using a library of prior CPDLC messages, natural language processing using a standard message format, a review of prevailing weather conditions, a review of a flight-plan and review of an air space status, and optionally wherein, based upon the situational urgency, the attention model performs one of: prioritizes the CPDLC message as critical and sends an alert to one or both of the pilot and the air traffic controller to conduct voice communications or anticipates a response to the CPDLC digital message and determines a second sample response, and optionally wherein the compliance system (108) reviews the sample response for regulatory compliance and based upon airspace restrictions, performs a conflict detection review and performs an operational logic review.
